(19) Europäisches Patentamt
European Patent Office
Office européen des brevets

(11) EP 0 417 775 B2

(12) NEW EUROPEAN PATENT SPECIFICATION

(45) Date of publication and mention of the opposition decision:
24.03.1999 Bulletin 1999/12

(45) Mention of the grant of the patent:
10.08.1994 Bulletin 1994/32

(21) Application number: 90117625.5

(22) Date of filing: 13.09.1990

(51) Int Cl.[6]: G11B 7/24

# (54) Molded article for optical use and optical information-storage medium

Geformter Gegenstand für optische Zwecke und Medium für optische Datenspeicherung

Objet moulé pour applications optiques et médium d'emmagasinage d'information optique

(84) Designated Contracting States:
DE FR GB NL

(30) Priority: 14.09.1989 JP 236882/89

(43) Date of publication of application:
20.03.1991 Bulletin 1991/12

(73) Proprietor: IDEMITSU PETROCHEMICAL CO., LTD.
Tokyo 108-0014 (JP)

(72) Inventors:
- Tsukahara, Makoto,
c/o IDEMITSU PETROCHEMICAL Co.
Kimitsu-gun, Chiba-ken (JP)
- Uchiyama, Katsumi,
c/o IDEMITSU PETROCHEMICAL Co.
Kimitsu-gun, Chiba-ken (JP)
- Fujishima, Toshihiko,
c/o IDEMITSU PETROCHEM. Co.
Kimitsu-gun, Chiba-ken (JP)

(74) Representative: Hoeger, Stellrecht & Partner
Uhlandstrasse 14 c
70182 Stuttgart (DE)

(56) References cited:

| | |
|---|---|
| EP-A- 262 695 | EP-A- 263 432 |
| EP-A- 293 769 | EP-A- 305 185 |
| EP-A- 379 130 | EP-A- 380 002 |
| EP-B- 25 928 | EP-B- 263 432 |
| EP-B- 338 085 | WO-A-89/02904 |
| DE-A- 3 429 960 | DE-A- 3 512 838 |
| FR-A- 2 605 134 | US-A- 4 038 252 |
| US-A- 4 346 210 | US-A- 4 460 752 |

- JP-A-60 113 201 (Engl. translation)
- JP-A-62 235 357 (Engl. translation)
- PLastics '85, proceedingsof the SPE 43rd annual technical con-ference and exhibition, 1985, "Polycarbonate Resins for Optical Memoriesand Compact Disks" by R. Riess & H. Loewer
- Triceps Co., Ltd. "Technology of forming optical discs" edition Planning Department, publisher Ken Kawauchi, 08.01.87

EP 0 417 775 B2

## Description

The present invention relates to a molded optical information-storage medium comprising an optical disk substrate.

Polycarbonate resin having a good moldability, good physical strength, ray permeability and excellent humidity resistance, have been used as an molded article for optical use utilized as optical material such as a lens, prism and optical fiber, as well as a substrate for an optical information-storage medium capable of reproduction, supplementary writing and rewriting of information by means of a laser ray, such as an audio-disk, laser disk, optical disk memory, magneto-optical disk and optical card.

However, the polycarbonate resins having such excellent properties have disadvantage in that white points will be generated in the resins under the circumstances of high temperature and high humidity.

On the other hand, among the above molded articles for optical use, an optical information-storage medium such as an optical disk substrate and an optical card needs to meet a requirement such that the medium should keep a good reliability for a long time, e.g., ten years or longer. However, as mentioned above, high temperature and high humidity will generate white points in the polycarbonate resin, resulting in increase in a bit error ratio (BER). The increase in the BER is one of the big causes to shorten the life of the optical information-storage medium.

For these reasons, several purification methods of a polycarbonate resin have been heretofore investigated. The following polycarbonate resins for a disk substrate and a process for producing such resins have been proposed. For example,

(1) Unexamined Patent Publication KOKAI Hei 1-146,926 proposes a polycarbonate molding material having not greater than 0.2 weight percent of a low molecular weight component having 1 to 3 repeating units of a molecular chain (n); and not greater than 10 ppm of unreacted bisphenol A;
(2) Unexamined Patent Publication KOKAI sho 64-56,729 proposes a method of extracting a granulated polycarbonate resin containing 4 to 8 weight percent of a low molecular weight component, 70 to 150 ppm of unreacted bisphenol and 50 to 150 ppm of methylene chloride with ketones at 40°C; and
(3) Unexamined Patent Publication KOKAI sno 63-316,313 discloses a polycarbonate resin containing not greater than 3 weight of a low molecular weight component, not greater than 20 ppm of unreacted bisphenol and not greater than 20 ppm of methylene chloride.

However, in order to obtain a molding material disclosed in KOKAI Hei 1-146.926, it is necessary to precipitate a polycarbonate resin dissolved in a methylene chloride solution by means of a poor solvent such as n-hexane. In this case, there is a problem that a polycarbonate resin having a molecular weight of about 15.000 becomes fine powders which are difficult to handle and difficult to mold. In the case of a process for preparing a polycarbonate resin disclose in KOKAI sho 64-56,729 and a polycarbonate resin disclosed in KOKAI sho 63-316,313, improvement of purity is not sufficient.

So far, the cause of the generation of the white points in a polycarbonate resin under the circumstances of high temperature and high humidity has not been clarified.

The present invention was made in view of the above situations, and has its objects of minimizing the generation of whit points and thus providing an optical information-storage medium having a good reliability.

The present inventors have made intensive studies to achieve the above objects, and as a result, the found that the generation of white points in a molded article prepared from a polycarbonate resin is caused by an interaction of a terminal hydroxy group and a small amount of remaining sodium, contained in a polycarbonate resin. It was also found that the generation of white points can be minimized by reducing the amount of the terminal hydroxyl group and the amount of remaining sodium in the polycarbonate resin to a certain predetermined amount, respectively, the present invention was made based on this finding.

Therefore, according to the present invention, there is now provided a molded optical information-storage medium according to claim 1.

More preferably, the polycarbonate resin contains not greater than 0.3 mol percent of terminal hydroxyl group per repeating unit and not greater than 1 ppm of remaining sodium, an 0.002 to 0.5 weight percent of fatty acid monoglyceride having 14 to 30 carbon atoms.

The optical information-storage medium according to the present invention is prepared by forming an optical information-storage recording layer on the surface of the optical disk substrate made of the above-mentioned polycarbonate resin.

Fig. 1 shows a structure of one embodiment of an optical information-storage medium according to the present invention;
Fig. 2 shows a structure of an optical information-storage medium as used in Examples and Comparative Examples; and

Fig. 3 is a grapn which shows a change in a bit error ratio in the experiments conducted using the optical information-storage media as shown in Fig. 2.

The molded optical information-storage medium according to the present invention can be formed from a polycarbonate resin which contains a terminal hydroxyl group content per polymerization repeating unit, of not greater than 0.3 mol percent, preferably not greater than 0.2 mol percent, and a remaining sodium content of not greater than 1 ppm, preferably not greater than 0.5 ppm.

The polycarbonate resins which can be used in the present invention, are not limited, but include, for example, a polycarbonate resin resulting from a reaction of a dihydric phenol and carbonic acid ester such as phosgene or diphenyl carbonate.

The dihydric phenols, which can be used in the present invention, include, for example, hydroquinone, 4,4'-dioxyphenyl, bis(hydroxyphenyl)alkane, bis(hydroxyphenyl)cycloalkane, bis(hysdroxyphenyl)keton, bis(hydroxyphenyl)sulfide, bis(hydroxyphenyl)ether, bis(hydroxyphenyl)sulfone, and the lower alkyl- or halogen-substituted derivatives thereof. Preferred are 2,2'-bis(4-hydroxyphenyl)propane (hereinafter referred to as Bisphenol A). 1,1-bis(4-hydroxyphenyl)ethane, 2,2-bis(4-hydroxyphenyl)-hexafluoropropane. The above, dihydric phenols may be used alone, or in a combination thereof.

The polycarbonate resins according to the present invention may have a branched chain in part. A grafted-copolymer with the other polymerizable monomer such as styrene, and a known resin blend mainly comprising a polycarbonate resin can be used.

In addition, according to the present invention, it is more preferable to add 0.002 to 0.5 weight percent, preferably 0.005 to 0.1 weight percent of fatty acid monoglyceride having 14 to 30. preferably 16 to 24 carbon atoms to the polycarbonate resin since the generation of white points is reduced for unknown reasons. As the fatty acid monoglyceride, a saturated monofatty acid monoglyceride is preferred. Examples of such monoglyceride are steric acid monoglyceride and behenic acid monoglyceride and a mixture thereof.

In the case of preparing an optical disk substrate, preferred is a polycarbonate resin having a viscosity-average molecular weight of 12,000 to 20.000. If the viscosity-average molecular weight is less than 12,000 in the case of optical disk substrates, the physical strength of the products may become too low to withstand practical use. If the viscosity-average molecular weight is higher than 20,000, in the case of optical disk substrates, the products having good moldability and optical properties cannot be obtained. Thus, the polycarbonate resins within in the above range are preferably used. The viscosity-average molecular weight can be controlled by adding an end-capping agent such as p-ter-butylphenol and p-cumylphenol, during the production of the polycarbonate resin.

Viscosity-average molecular weight Mv can be calculated by determining a specific viscosity $\eta_{sp}$ of a solution of polycarbonate in methylene chloride at 20°C, and using the following equations:

$$\eta_{sp}/C = [\eta]\ (1 + 0.28\ \eta_{sp})$$

wherein C means a concentration of polycarbonate resin (g/l), and

$$[\eta] = 1.23 \times 10^{-5}\ M_v^{0.83}$$

Further, the polycarbonate resins as used in the present invention preferably have a foreign-substances index of not more than 30,000 $\mu m^2/g$, more preferably not more than 15,000 $\mu m^2/g$. The bit error ratio can be reduced by using such polycarbonate resins.

As used herein, the term "foreign-substances index" means a sum of a product of (i) a square of a particle diameter and (ii) the number, of each foreign substance (having a particle diameter of 0.5 μm or more) per unit weight. The foreign-substances are detected in a solution prepared by dissolving in an excess amount of an organic solvent (particularly, methylene chloride) a material (e.g., a raw material or a substrate) to be evaluated. The index is calculated from the equation:

$$I = \Sigma\{[\tfrac{1}{2}\ (d_i + d_{i+1})]^2 \times (n_i - n_i')\} - W$$

wherein

I denotes the foreign-substances index;
$d_i$ denotes an i-th numerical value (μm) for dividing a range of the particle diameter;
$n_i$ denotes the number of foreign substances having a particle diameter of less than di + 1 and not less than di, and detected in the solvent;
$n_i'$ denotes the number of foreign substances involved in the solvent before use; and
W denotes the weight (g) of a material.

As used herein, the term "foreign substances" means essentially contaminants such as impurities, dust or carbonized material of raw resin, which have been included in the optical disk substrate at various stages. Nevertheless, the bit error ratio of the optical disk substrate can be accurately evaluated by using the foreign-substances index calculated from the "foreign substances" which are an insoluble residue in methylene chloride.

In the practice of the present invention, any methods can be used to make the polycarbonate resin to have a terminal hydroxyl group content of not more than 0.3 mol percent and a remaining sodium content of not more than 1 ppm. It is preferable to combine effective methods such as optimization of polycondensation conditions for producing a polycarbonate resin; washing of a methylene chloride solution after polycondensation with alkali, acid and highly purified water; and washing of powder polymers with a poor solvent such as acetone.

Preferable methods include, for example, a process which comprises sufficiently washing a polycondensate solution, preparing powders of the polycondensate from the polycarbonate solution in warm water using a method, for example, described In KOKAI Hei 1-74,231, and then washing the obtained powders with a mixed solution comprising methylene chloride and acetone. According to this technique, powders of polycondensates having a particle size of about 1 mm can be obtained even if the polycondensates have low molecular weight. Thus, the obtained products are easy to handle and easy to melt-mold.

The molded optical information-storage medium comprising an optical disk substrate according to the present invention can be prepared by injection-molding. The content of impurities such as a low molecular weight component, unreacted component and metal component, foreign substances and a solvent in a starting polycarbonate resin for injection-molding, may be lowered as much as possible. The content can be lowered by, for example, as mentioned above, washing a polycarbonate solution with an acid, alkali and water several times, by changing acid or alkali concentration, by subjecting the solution to a filter treatment, or by washing a starting material in the form of powders with a poor solvent such as acetone under heating conditions. In addition to the above, the terminal hydroxyl group content is controlled to be low by, for example, changing polycondensation conditions. Further, it is possible to add additives such as antioxidants such as phosphorus antioxidants.

During the injection molding, the temperature of the resin may be controlled at 300 to 400° C, and the temperature of the mold may be controlled usually at 50 to 140°C, more preferably at 80 to 130°C. Further, the material of the mold is appropriately chosen so that incorporation of the metal component from the mold into the resins is minimized during the injection molding.

In addition, it is possible that only a surface temperature of the mold is made higher than a glass transition temperature of the resin, using a high frequency or the like, and after injecting the resin, the resin may be cooled to a temperature at which the disk substrate can be taken out. This process results in a substrate having improved optical properties.

One of embodiments of an optical information-storage medium comprising an optical disk substrate according to the present invention, will be further described with reference to Figure 1.

In Fig. 1, 1 denotes an optical disk substrate formed of a polycarbonate resin; and 2 denotes a recording layer. The recording layer 2 is formed by means of, for example, deposition or sputtering, and made of materials comprising a transition metal such as Fe and Co and a rare earth metal such as Tb, Gd,Nd and Dy. 3 denotes a protective layer for protection the recording layer 2 which is formed of silicon based ceramics and 4 denotes an adhesive layer.

The optical information-storage medium wherein the recording layer is formed on the optical disk substrate, prepared as above, can be primarily used as supplementary write once type or rewritable type.

As mentioned above, the molded optical information-storage medium according to the present invention can be used as several optical goods such as an optical disk, optical card, optical fiber and optical lens since the generation of white points is sufficiently minimized.

Further, the optical information-storage medium according to the present invention has improved reliability for a long-term use since the medium exhibits small bit error ratio at high temperature and high humidity.

The present invention will be further described with reference to non-limitative Examples.

EXAMPLES

In Examples 1 to 4 and Comparative Examples 1 to 3, optical disk substrates as described in Table 1 were

prepared by injection molding. In these Examples or Comparative Examples, the terminal hydroxyl group content and the sodium content were controlled by changing the following conditions (a) to (d) properly.

(a) Polycondensation Conditions
(b) Conditions of Washing with Acid, Alkali and Water
(c) Granulation Conditions
(d) Conditions for Extractions of powder Products

In the case of changing Condition (d), a granulated polycarbonate resin in a mixed solution of methylene chloride (good solvent for polycarbonate) and acetone (poor solvent), was extracted as follows. The granulated polycarbonat resin and the solution were mixed in a polycarbonate: solution ratio (volume) of 1:3.

| | Methylene Chloride:Acetone | temp. (°C) | Time (hours) | Number of Extraction |
|---|---|---|---|---|
| Example 1 | 2:8 | 50 | 1 | 2 |
| Example 2 | 2:8 | 50 | 1 | 2 |
| Example 3 | 1:9 | 50 | 1 | 1 |
| Example 4 | 1:9 | 50 | 1 | 1 |
| Comp. Ex. 1 | 0:10 | 50 | 1 | 1 |
| Comp. Ex. 2 | - | - | - | - |
| Comp. Ex. 3 | - | - | - | - |

Note: The optical disk substrates used in Comparative Examples 2 and 3 were commercially available products.

In addition, the viscosity-average molecular weight, the terminal hydroxyl group content and the sodium content were measured in accordance with the following methods. The injection molding was conducted under the following conditions.

<u>VISCOSITY-AVERAGE MOLECULAR WEIGHT</u>

Measurement Method: Schnell Viscosity Equation

$$[\eta] = 1.23 \times 10^{-5} Mv^{0,83}$$

wherein $\eta$ is intrinsic viscosity.

<u>TERMINAL HYDROXYL GROUP CONTENT</u>

Measurement Method: $^1$H-NMR

$$\text{Terminal Hydroxyl Group Content (mol\%)} = \frac{\text{Number of Terminal Hydroxyl Groups}}{\text{Number of Repeating Units of Polymer Chain (n)}} \times 100\%$$

As used herein, n means the number of the repeating unit:

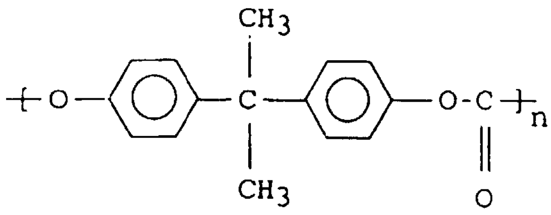

REMAINING SODIUM CONTENT

Measurement Method: Atomic Abosorption Spectrometry.

INJECTION MOLDING

A polycarbonate resin as starting material was injection-molded at a molding temperature of 340°C and at a mold temperature of 120°C to obtain an optical disk substrate having a substrate size of 130 mm ϕ and a thickness of 1.2 mm.

And then, the accelerating deterioration test and bit error ratio test as described below were conducted using the optical disk substrates obtained in the Examples and the Comparative Examples.

ACCELERATING DETERIORATION TEST

(1) High Temperature/ High Humidity Condition:

70°C-90%RH
80°C-90%RH

(2) Ten optical disk substrates of each sample were taken out periodically and white points having a size of not smaller than 50 μm m appearing in the samples were counted by visual observation. The average numbers of the white points counted are shown in Table 1.

As a result of these tests, it was found that in the polycarbonate resin substrates of the present invention, the generation of the white points was drastically minimized as compared to conventional substrates. It was also found that if the terminal hydroxyl group content and the sodium content exceed the range determined in the present invention, the generation of the white points drastically increased in the molded articles for optical use.

BIT ERROR RATIO TEST

Optical information-storage medium were prepared by using the optical disk substrate obtained in Examples 1 to 4 and Comparative Examples 1 to 3.

(1) The optical information-storage medium had a one-side recording structure as shown in Fig. 2.

| | |
|---|---|
| Recording Layer; | Tb-Fe- Co Type (800Å) |
| Protective Layer; | Silicon Based Ceramics (800Å) |
| Over Coating Layer; | Ultra Violet Ray Curable Resin (10 micron m) |

(2) Changes in the bit error ratio were checked when each optical information-storage medium was kept at 80°C and at 90%RH atmosphere. The results are as shown in Fig. 3.

As a result of this test, it was found that in the case of the optical information-storage medium according to the present invention, the change in the bit error ratio is small.

Table 1

| Example comp. Example | Viscosity Average molecular weight Mv | Hydroxyl Group (mol%) | Sodium (ppm) | Fatty Acid Monoglyceride (ppm) | Number of White Points Generated (per substrate) 70°C 90% RH 1000H | 70°C 90% RH 2000H | 80°C 90% RH 1000H | 80°C 90% RH 2000H |
|---|---|---|---|---|---|---|---|---|
| Example 1 | 14,800 | 0.10 | <0.1 | - | 0 | 0 | 0 | 0 |
| Example 2 | 14,700 | 0.21 | <0.1 | - | 0 | 0 | 0 | 0 |
| Example 3 | 14,900 | 0.28 | <0.1 | 100 | 0 | 0.3 | 0 | 0.5 |
| Example 4 | 14,800 | 0.28 | <0.1 | 250 | 0 | 0 | 0 | 0 |
| Comp. EX. 1 | 14,900 | 0.31 | 0.4 | - | 1.6 | 3.0 | 2.9 | 9.3 |
| Comp. EX. 2 | 14,600 | 0.36 | 0.8 | - | 3.4 | 9.1 | 4.9 | 11.8 |
| Comp. EX. 3 | 14,800 | 0.41 | 1.1 | - | 8.1 | 12.2 | 2.9 | 33.0 |

* The fatty acid monoglyceride is behenic acid monoglyceride

* The amount of bisphenol A is less than the boundary of measurement. (all samples)

## Claims

1. A molded optical information-storage medium comprising an optical disk substrate comprising a polycarbonate resin containing a terminal hydroxyl group content, per polymerization repeating unit, of not greater than 0.3 mol

percent and a remaining sodium content of not greater than 1 ppm and an optical information-storage recording layer formed on the substrate.

**2.** The molded medium according to claim 1, wherein the polycarbonate resin contains 0.002 to 0.5 weight percent of fatty acid monoglyceride having 14 to 30 carbon atoms.

**3.** The molded medium according to claim 1, wherein the polycarbonate resin is a reaction product of a dihydric phenol and a carbonic acid ester or phosgene.

**4.** The molded medium according to claim 3, wherein the dihydric phenol is hydroquinone, 4,4'-dioxyphenyl,bis(hydroxyphenyl)alkane, bis(hydroxyphenyl)cycloalkane, bis(hydroxyphenyl)ketone, bis(hydroxyphenyl)sulfide, bis (hydroxyphenyl)ether, bis(hydroxyphenyl)sulfone, or the lower alkyl- or halogen-substituted derivatives thereof.

**5.** The molded medium according to claim 1, wherein the optical information-storage recording layer is formed of metals selected from Fe, Co, Tb, Gd, Nd and Dy.

**6.** The molded medium according to claim 5, wherein the optical information-storage recording layer is formed of a Tb-Fe-Co alloy.

## Patentansprüche

**1.** Geformtes Medium für optische Datenspeicherung, umfassend ein optisches Plattensubstrat, welches ein Polycarbonatharz mit einen Gehalt an endständigen Hydroxylgrouppen von nicht mehr als 0,3 Mol% pro sich wiederholender Polymerisationseinheit umfaßt und einen restlichen Natriumgehalt von nicht mehr als 1 ppm enthält, sowie eine optische Datenspeicherungs-Aufzeichnungsschicht, welche auf dem Substrat gebildet ist.

**2.** Geformtes Medium für optische Zwecke nach Anspruch 1, bei dem das Polycarbonatharz 0,002 bis 0,5 Gew.% Fettsäuremonoglycerid mit 14 bis 30 Kohlenstoffatomen enthält.

**3.** Geformtes Medium nach Anspruch 1, bei dem das Polycarbonatharz ein Reaktionsprodukt eines zweiwertigen Phenols und eines Kohlensäureesters oder Phosgen ist.

**4.** Geformtes Medium nach Anspruch 3, bei dem das zweiwertige Phenol Hydrochinon, 4,4'-Dioxyphenyl, bis(Hydroxyphenyl)-alkan, Bis-(hydroxyphenyl)-cycloalkan, Bis(hydroxyphenyl)-keton, Bis-/hydroxyphenyl)-sulfid, Bis(hydroxyphenyl)-ether, Bis-(hydroxyphenyl)-sulfon oder ein Nieder-Alkyl- oder halogensubstituiertes Derivat der vorgenannten Verbindungen ist.

**5.** Geformtes Medium für optische Datenspeicherung nach Anspruch 1, bei dem die Aufzeichnungsschicht für eine optische Datenspeicherung aus Metallen gebildet ist, die aus der Gruppe, bestehend aus Fe, Co, Tb, Gd, Nd und Dy, ausgewählt ist.

**6.** Geformtes Medium für optische Datenspeicherung nach Anspruch 5, bei dem die Aufzeichnungsschicht für eine optische Datenspeicherung aus einer Tb-Fe-Co-Legierung gebildet ist.

## Revendications

**1.** Support de stockage d'informations optiques comprenant un substrat de disque optique contenant une résine polycarbonate contenant une certaine quantité de groupe hydroxyle terminal par élément répétitif de polymérisation, qui n'est pas supérieure à 0,3 mole pour cent et une certaine quantité de sodium restant qui n'est pas supérieure à 1 ppm et une couche d'enregistrement support d'informations formée sur le substrat.

**2.** Support moulé selon la revendication 1, dans lequel la résine polycarbonate contient 0,002 à 0,5 pour cent en poids d'acide gras monoglycéride ayant 14 à 30 atomes de carbone.

**3.** Support moulé selon la revendication 1, dans lequel la résine polycarbonate est un produit de réaction d'un phénol dihydrique et d'un ester d'acide carbonique ou phosgène.

4. Support moulé selon la revendication 3, dans lequel le phénol dihydrique est l'hydroquinone, le 4,4'-4,4'-dioxyphényle, le bis(hydroxyphényle)alcane, le bis(hydroxyphényle)cycloalcane, le bis(hydroxyphényle)kétone, le bis(hydroxyphényle)sulfure, le bis(hydroxyphényle)éther, le bis(hydroxyphényle)sulfone ou les dérivés substitués inférieurs allkyle- ou halogène- de ceux-ci.

5. Support moulé selon la revendication 1, dans lequel la couche d'enregistrement de stockage d'informations optiques est formée de métaux sélectionnés parmi Fe, Co, Tb, Gd, Nd et Dy.

6. Support moulé selon la revendication 5, dans lequel la couche d'enregistrement de stockage d'informations optiques est formé d'un alliage de Tb-Fe-Co.

Fig. 1

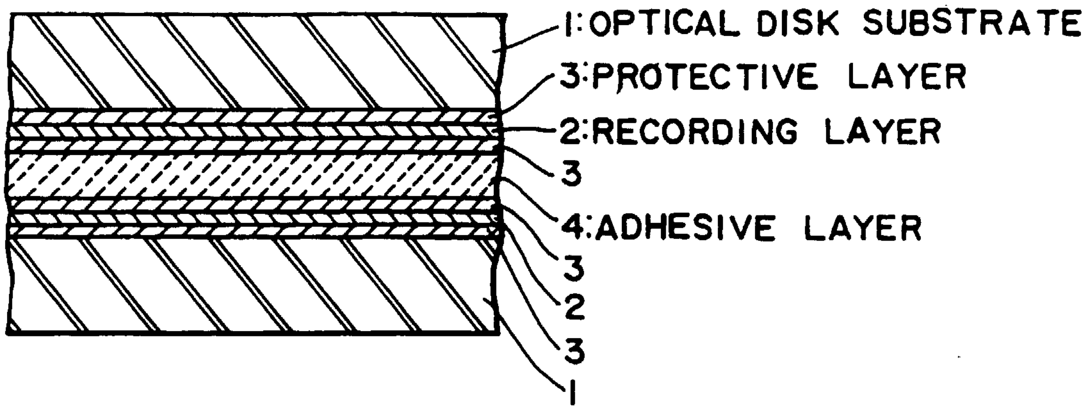
1:OPTICAL DISK SUBSTRATE
3:PROTECTIVE LAYER
2:RECORDING LAYER
3
4:ADHESIVE LAYER
3
2
3
1

Fig. 2

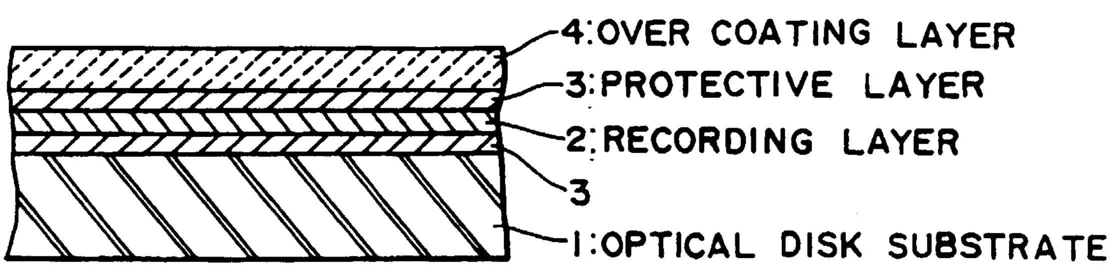
4:OVER COATING LAYER
3:PROTECTIVE LAYER
2:RECORDING LAYER
3
1:OPTICAL DISK SUBSTRATE

Fig. 3

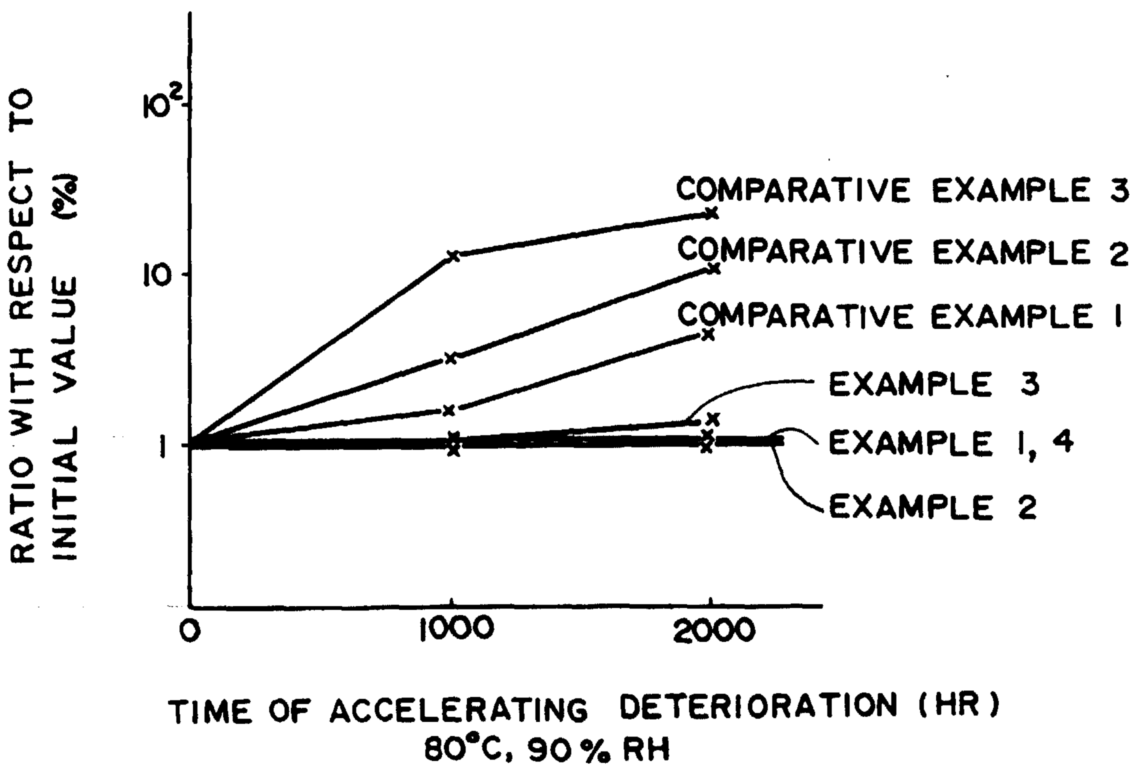
RATIO WITH RESPECT TO INITIAL VALUE (%)
$10^2$
10
1
0
1000
2000
COMPARATIVE EXAMPLE 3
COMPARATIVE EXAMPLE 2
COMPARATIVE EXAMPLE 1
EXAMPLE 3
EXAMPLE 1, 4
EXAMPLE 2
TIME OF ACCELERATING DETERIORATION (HR)
80°C, 90 % RH